(19) Europäisches Patentamt
European Patent Office
Office européen des brevets

(11) Veröffentlichungsnummer: **0 087 732**
**A1**

(12) # EUROPÄISCHE PATENTANMELDUNG

(21) Anmeldenummer: 83101709.0

(22) Anmeldetag: 22.02.83

(51) Int. Cl.³: C 01 B 33/02
C 01 B 33/18

(30) Priorität: 25.02.82 DE 3206766

(43) Veröffentlichungstag der Anmeldung: 07.09.83 Patentblatt 83/36

(84) Benannte Vertragsstaaten: CH FR GB LI SE

(71) Anmelder: SIEMENS AKTIENGESELLSCHAFT
Berlin und München Wittelsbacherplatz 2
D-8000 München 2(DE)

(72) Erfinder: Aulich, Hubert, Dr.
Schwarzstrasse 3
D-8000 München 80(DE)

(72) Erfinder: Eisenrith, Karl-Heinz
Triftstrasse 1
D-8162 Schliersee(DE)

(72) Erfinder: Urbach, Hans-Peter, Dr.rer.nat.
Salbauerstrasse 5
D-8000 München 60(DE)

(54) **Verfahren zum Herstellen von für Solarzellen verwendbarem Silizium.**

(57) Die Erfindung betrifft ein Verfahren zum Herstellen von für Solarzellen verwendbarem Silizium, bei dem das für die Reduktion mit Kohlenstoff im Lichtbogen verwendete $SiO_2$ dadurch hergestellt wird, daß Natriumhexafluorosilikat (3) thermisch (1) zu Natriumfluorid und Siliziumtetrafluorid zersetzt und das Siliziumtetrafluorid in alkalischer, vorzugsweise ammonialkalischer Lösung (9, 13) hydrolisiert wird. Zur Verringerung des Borgehaltes wird das Siliziumtetrafluorid vor der Hydrolyse (9) durch eine Dioxanlösung (6) geleitet, wobei sich das im Siliziumtetrafluorid enthaltende Bortrifluorid als Ätherat löst. Auf diese Weise kann Silizium aus billigen Ausgangsmaterialien durch einfache Prozeßschritte hergestellt werden.

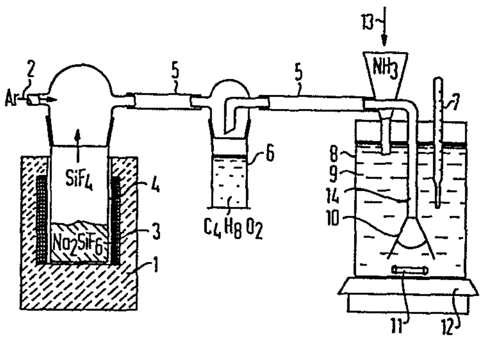


EP 0 087 732 A1

Croydon Printing Company Ltd.

0087732

SIEMENS AKTIENGESELLSCHAFT
Berlin und München

Unser Zeichen
VPA 82 P 1128 E

Verfahren zum Herstellen von für Solarzellen verwendbarem Silizium.

Die vorliegende Patentanmeldung betrifft ein Verfahren zum Herstellen von für Solarzellen verwendbarem Silizium durch Reduktion von Siliziumdioxid ($SiO_2$) mit Kohlenstoff im Lichtbogen.

Das durch die großtechnische Herstellung durch Reduktion von Quarz ($SiO_2$) mit Kohlenstoff im Lichtbogen gewonnene Silizium ist bezüglich seiner Reinheit für die Fertigung von Solarzellen nicht geeignet. Die geringe Reinheit des technischen Siliziums (98 % Si-Gehalt) ist zum Teil auf den für seine Herstellung verwendeten stark verunreinigten Quarz zurückzuführen.

Aus der DE-OS 30 13 319 ist ein Verfahren zur Herstellung von für Solarzellen geeignetem Silizium bekannt, bei dem bergmännisch abgebauter Quarz hoher Reinheit für die Reduktion mit Kohlenstoff verwendet wird. Das so hergestellte Silizium hat zwar eine wesentlich höhere Reinheit als das großtechnisch gewonnene Produkt, jedoch ist auch hier zur Beseitigung der die Bauelementparameter störenden Verunreinigungen noch ein zusätzlicher Reinigungsschritt, z. B. ein Kristallziehprozeß nach Czochralski erforderlich.

Die Aufgabe, die der Erfindung zugrundeliegt, besteht in der Herstellung von Siliziumdioxid ($SiO_2$) von gleichbleibender Qualität, welches als Ausgangsmaterial für die Reduktion mit Kohlenstoff im Lichtbogen geeignet ist, wobei dessen Verunreinigungspegel deutlich unter dem von natürlichen Quarzen liegt. Außerdem soll seine Herstellung

Edt 1 Plr/25.2.1982

einfach und mit billigen Ausgangsmaterialien durchführbar sein.

Diese Aufgabe wird durch das erfindungsgemäße Verfahren dadurch gelöst, daß

a) als Ausgangsmaterial Natriumhexafluorosilikat ($Na_2SiF_6$) verwendet wird,

b) das Natriumhexafluorosilikat zu Natriumfluorid (NaF) und Siliziumtetrafluorid ($SiF_4$) thermisch zersetzt wird,

c) das Siliziumtetrafluorid in alkalischer, vorzugsweise ammonialkalischer Lösung im Bereich des pH-Wertes von 7 bei einer Temperatur im Bereich von 30 bis 100°C hydrolisiert wird und

d) das gebildete $SiO_2$ sofort aus dem Reaktionsraum entfernt, mit heißem Wasser behandelt und getrocknet wird.

Bei dem erfindungsgemäßen Verfahren laufen folgende Reaktionen ab:

$$Na_2SiF_6 \xrightarrow{\sim 700^\circ C} 2\ NaF + SiF_4$$

$$3\ SiF_4 + 2\ H_2O \longrightarrow SiO_2 + 2\ H_2SiF_6$$

$$H_2SiF_6 + 6\ NH_4OH \longrightarrow 6\ NH_4F + SiO_2 + 3 \cdot H_2O$$

Verunreinigungen, wie z. B. Fe, Cu, Cr, Mo, Ti u.s.w., die im Ausgangsmaterial vorhanden sein können, bilden bei dessen Zersetzung schwerflüchtige Fluoride und verbleiben deshalb im NaF-Rückstand.

Für die Herstellung von Solarzellen muß das Siliziumaus-

BAD ORIGINAL

gangsmaterial neben einem sehr geringen Gehalt an Übergangsmetallionen auch einen sehr geringen Borgehalt aufweisen. Häufig besitzt jedoch Natriumhexafluorosilikat Verunreinigungen an Bor, die bei der thermischen Zersetzung als flüchtige Fluoride (Bortrifluorid) gemeinsam mit dem Siliziumtetrafluorid in die Hydrolyselösung getragen und dort ebenfalls hydrolisiert werden. Dadurch besitzt das entstehende $SiO_2$ einen zu hohen Bor-Gehalt. Um dies zu verhindern, ist in einer Weiterbildung des Erfindungsgedankens vorgesehen, das gasförmige Siliziumtetrafluorid vor der Hydrolyse durch eine Ätherlösung, welche vorzugsweise aus 1,4-Dioxan ($C_4H_8O_2$) besteht, zu leiten, in der sich Verbindungen wie Bortrifluorid ($BF_3$) als Ätherate bevorzugt lösen und somit aus dem Siliziumtetrafluorid entfernt werden können. Alternativ dazu kann auch das bei der Natriumhexafluorosilikat-Zersetzung frei werdende Siliziumtetrafluorid bei ca. -100°C kondensiert und durch anschließende kontrollierte Sublimation gereinigt werden.

Eine weitere Möglichkeit der Reduzierung des Borgehaltes besteht darin, das Natriumhexafluoroslilikat vor seiner thermischen Zersetzung durch eine Umkristallisation zu reinigen und dabei die gut löslichen Alkaliverbindungen des Bors zu entfernen.

Es liegt im Rahmen der Erfindung, daß das in der Phosphat- und Düngemittelindustrie anfallende Abfallprodukt Natriumhexafluorosilikat als Ausgangsmaterial für die $SiO_2$-Gewinnung verwendet wird, wodurch sich das erfindungsgemäße Verfahren besonders billig durchführen läßt.

Die Siliziumtetrafluoridhydrolyse erfolgt zweckmäßigerweise im Temperaturbereich zwischen 70°C und 100°C, da hier die Filtrierbarkeit des $SiO_2$ am besten ist. Die dosierte Zugabe von z. B. Ammoniak hat so zu erfolgen, daß die Siliziumtetrafluoridhydrolyse genau am Neutral-

BAD ORIGINAL

punkt (pH-Wert = 7) abläuft. Das gesamte Flüssigkeitsvolumen muß so bemessen sein, daß das Löslichkeitsprodukt von z. B. Ammoniumfluorid nicht überschritten wird.

Weitere Einzelheiten sind nachfolgend einem Ausführungsbeispiel und der in der Zeichnung befindlichen Figur, sowie deren Beschreibung zu entnehmen. Die Figur zeigt schematisch eine Anordnung zur Zersetzung von Natriumhexafluorosilikat und zur Hydrolyse von Siliziumtetrafluorid.

Das in einem, mit einer Zu (2)- und einer Abgasleitung (5) versehenen Quarzglasbehälter 4 befindliche Ausgangsmaterial Natriumhexafluorosilikat 3 ($Na_2SiF_6$) wird im Widerstandsofen 1 bei einer Temperatur zwischen 650°C und 700°C zersetzt. Das freiwerdende Siliziumtetrafluorid ($SiF_4$) wird von Argon als Trägergas (siehe Pfeil 2) über ein Quarzglasgefäß 6 in die, im Quarzglasbehälter 8 befindliche Hydrolyselösung 9 geleitet. Der Trichter 10 am Ende des Einleitungsrohres 14 und kräftiges Rühren mit einem Teflon-Rührer 11 verhindern, daß das Siliziumtetrafluorid-Einleitungsrohr 14 mit sich bildendem $SiO_2$ verstopft wird. Der pH-Wert der wäßrigen Vorlage 9 wird während der Reaktion durch dosierte Ammoniak-Zugabe ($NH_3$, siehe Pfeil 13) auf den pH-Wert = 7 eingestellt. Die Temperatur der Hydrolyselösung 9 wird mit einer Heizplatte 12 (mit Rührmotor) auf 70° bis 100°C eingestellt und mittels des Thermometers 7 kontrolliert.

Das in der Hydrolyselösung anfallende $SiO_2$ wird in einer Laminarbox abfiltriert, mit heißem Wasser gewaschen und anschließend bei 250°C getrocknet. Es kann sofort dem Lichtbogenverfahren zugeführt werden.

Zur Reduzierung des als Bortrifluorid ($BF_3$) im Siliziumtetrafluorid enthaltenen Bors befindet sich im Quarzglasbehälter 6 eine 1,4-Dioxanlösung, in welche das Bortri-

BAD ORIGINAL

fluorid als Ätherat gelöst wird. Mit dem Bezugszeichen 5 sind Teflonverbindungen bezeichnet, die die einzelnen Quarzglasbehälter 4, 6 und 8 miteinander verbinden.

Nach Durchführung des erfindungsgemäßen Verfahrens liegt der Gehalt an Übergangsmetallionen im gewonnenen $SiO_2$ unter 1 ppm, der von Magnesium und Aluminium unter 10 ppm und der von Bor unter 1 ppm.

9 Patentansprüche

1 Figur

Patentansprüche.

1. Verfahren zum Herstellen von für Solarzellen verwendbarem Silizium durch Reduktion von Siliziumdioxid ($SiO_2$) mit Kohlenstoff im Lichtbogen, dadurch gekennzeichnet, daß

a) als Ausgangsmaterial Natriumhexafluorosilikat (3) verwendet wird,

b) das Natriumhexafluorosilikat (3) zu Natriumfluorid und Siliziumtetrafluorid thermisch zersetzt wird,

c) das Siliziumtetrafluorid in alkalischer, vorzugsweise ammonialkalischer Lösung (2, 13) im Bereich des pH-Wertes von 7 bei einer Temperatur im Bereich von 30 bis 100°C hydrolisiert wird und

d) das gebildete $SiO_2$ sofort aus dem Reaktionsraum (9) entfernt, mit heißem Wasser behandelt und getrocknet wird.

2. Verfahren nach Anspruch 1, dadurch gekennzeichnet, daß zur Reduzierung des Borgehaltes das gasförmige Siliziumtetrafluorid vor der Hydrolyse (9) durch eine Ätherlösung (6), vorzugsweise bestehend aus 1,4-Dioxan, geleitet wird.

3. Verfahren nach Anspruch 1, dadurch gekennzeichnet, daß zur Reduzierung des Borgehaltes das gasförmige Siliziumtetrafluorid vor der Hydrolyse bei ca. -100°C kondensiert und anschließend durch kontrollierte Sublimation gereinigt wird.

4. Verfahren nach Anspruch 1, dadurch gekennzeichnet, daß das Ausgangsmaterial vor seiner thermischen Zersetzung durch Umkristallisation

BAD ORIGINAL

gereinigt wird, wobei die gut löslichen Alkaliverbindungen des Bors entfernt werden.

5. Verfahren nach Anspruch 1 bis 4, d a d u r c h g e k e n n z e i c h n e t , daß als Ausgangsmaterial (3) das in der Phosphat- und Düngemittelindustrie anfallende Abfallprodukt Natriumhexafluorosilikat ($Na_2SiF_6$) verwendet wird.

6. Verfahren nach Anspruch 1 bis 5, d a d u r c h g e k e n n z e i c h n e t , daß die thermische Zersetzung (1) bei 650 bis 700°C durchgeführt wird.

7. Verfahren nach Anspruch 1 bis 6, d a d u r c h g e k e n n z e i c h n e t , daß die Hydrolyse (9) bei einer Temperatur im Bereich von 70 bis 100°C durchgeführt wird.

8. Verfahren nach Anspruch 1 bis 7, d a d u r c h g e k e n n z e i c h n e t , daß als Trägergas (2) ein inertes Gas, vorzugsweise Argon (Ar), verwendet wird.

9. Verfahren nach Anspruch 1 bis 8, d a d u r c h g e k e n n z e i c h n e t , daß das $SiO_2$ vor dem Lichtbogenverfahren bei 250°C getrocknet wird.

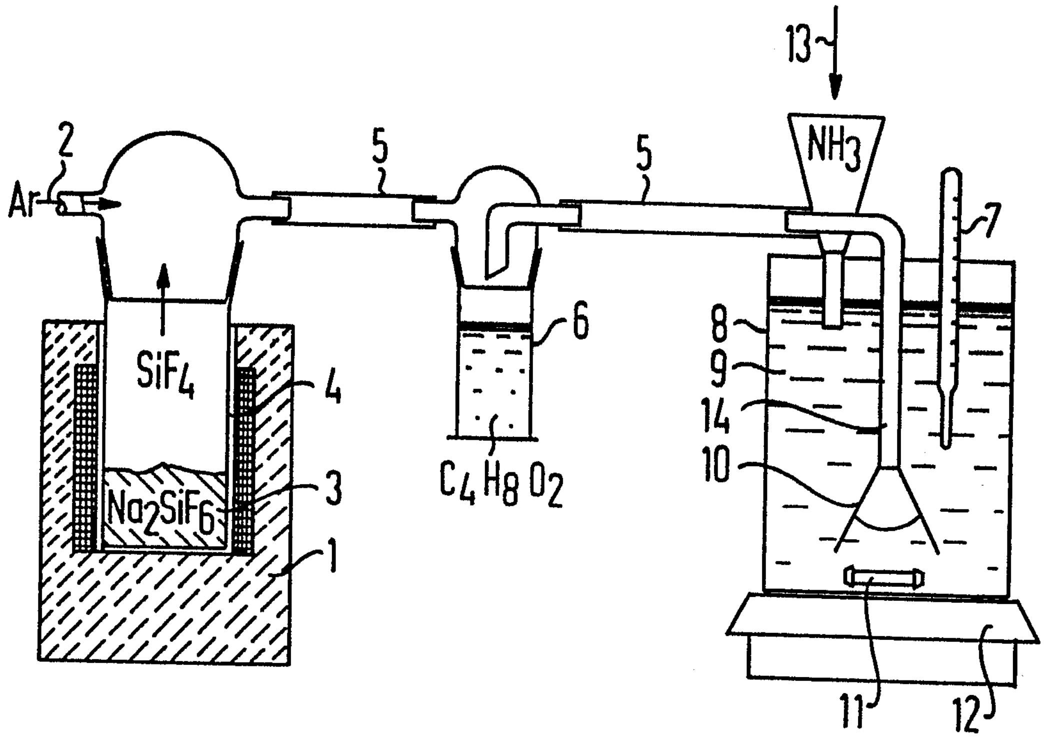
13
NH3
2
Ar
5
5
7
6
8
9
SiF4
4
14
10
Na2SiF6
3
1
C4 H8 O2
11
12

Europäisches Patentamt

# EUROPÄISCHER RECHERCHENBERICHT

0087732
Nummer der Anmeldung

EP 83 10 1709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | | | C 01 B 33/02<br>C 01 B 33/18 |
| A | US-A-4 138 509 (W.M. INGLE et al.)<br>* Spalte 3, Zeilen 31-37 *<br>--- | | |
| A | DE-A-2 800 272 (VSESOJUZNYI INSTITUT)<br>* Seiten 9-10 *<br>--- | | |
| A | DE-B-2 347 485 (BAYER AG)<br>--- | | |
| A | DE-A-1 816 377 (G.L. FLEMMERT)<br>--- | | |
| D,A | DE-A-3 013 319 (DOW CORNING CORP.)<br>----- | | |
| | | | RECHERCHIERTE SACHGEBIETE (Int. Cl. 3) |
| | | | C 01 B 7/00<br>C 01 B 33/00<br>C 01 C 1/00 |

Der vorliegende Recherchenbericht wurde für alle Patentansprüche erstellt.

| Recherchenort | Abschlußdatum der Recherche | Prüfer |
|---|---|---|
| BERLIN | 31-05-1983 | KESTEN W |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82